## Europäisches Patentamt
## European Patent Office
## Office européen des brevets

(11) Veröffentlichungsnummer: **0 190 416**
A2

## (12) EUROPÄISCHE PATENTANMELDUNG

(21) Anmeldenummer: 85114583.9

(22) Anmeldetag: 16.11.85

(51) Int. Cl.⁴: **B 01 D 53/34**

(30) Priorität: 30.11.84 AT 3800/84
29.01.85 AT 233/85

(43) Veröffentlichungstag der Anmeldung:
13.08.86 Patentblatt 86/33

(84) Benannte Vertragsstaaten:
AT BE CH DE FR GB IT LI LU NL SE

(71) Anmelder: WAAGNER-BIRO AKTIENGESELLSCHAFT
Stadlauer-Strasse 54
A-1221 Wien(AT)

(72) Erfinder: Glasner, Alfred, Dipl.-Ing.
Alte Poststrasse 55/1
A-8020 Graz(AT)

(72) Erfinder: Lindbauer, Ralf, Dr.
Statteggerstrasse 81e
A-8045 Graz(AT)

(74) Vertreter: Wallner, Gerhard, Dipl.-Ing.
Waagner-Biro Aktiengesellschaft Patentreferat Postfach 11
A-1221 Wien(AT)

(54) Verfahren zur Abscheidung von Schadstoffen as Verbrennungsabgasen.

(57) Aus der Kenntnis der Sorptionschemie und dem Verhalten der Sorbentien wird für die Endreinigung des Rauchgases nach Verbrennungsanlagen im Temperaturbereich von etwa 400 °C eine Mischung von Sorbentien in Abhängigkeit der Rauchgaszusammensetzung angegeben, die den Verbrauch an Sorbentien bedeutend reduziert und somit das Deponieproblem entschärft und/oder die Aufarbeitung der beladenen Sorbentien ermöglicht. Darüber hinaus wird auch die Herstellung des Sorbens aus $NH_3$ und den Bestandteilen des Rauchgases angegeben. Durch dieses Verfahren können Altanlagen umgerüstet werden, wobei die an die Atmosphäre abgegebenen Rauchgase den Umweltschutzauflagen für Neuanlagen gerecht werden. Auch die Verwendung bei Neuanlagen ist von Vorteil, da die beladenen Sorbentien in großer Reinheit anfallen und als Grundstoff für Baustoff und/oder Düngemittelfabriken geeignet sind.

EP 0 190 416 A2

0190416

## Verfahren zur Abscheidung von Schadstoffen aus Verbrennungsabgasen

Die Erfindung betrifft ein Verfahren zur Abscheidung von Schadstoffen, wie z.B. $SO_2$, HCl und $NO_x$, aus Verbrennungsabgasen mittels trockener Sorbentien auf Basis Oxidhydraten/Hydroxiden bzw. Oxiden wie z.B. $Ca(OH)_2$, AlOOH, $Al(OH)_3$, $Al_2O_3xH_2O$, Bauxit, CaO, NaOH und/oder Karbonaten/Hydrogenkarbonaten, insbesondere mit hoher Brennkammertemperatur, wie z.B. Steinkohlenfeuerung, bei dem die staubförmigen Sorbentien bei unter 400 $^\circ$ C Rauchgastemperatur in zumindest einen Teilstrom des Rauchgasstromes unter Bindung der eventuell vorhandenen Chloride eingeblasen und die Rauchgase anschließend nach einer Abscheidung der festen Bestandteile über einen Kamin in die freie Atmosphäre abgegeben werden, und eine Einrichtung zur Durchführung des Verfahrens.

Aus der DE-OS 31 39 080 ist es bekannt, zur Chlor- und/oder Fluorabscheidung aus den Rauchgasen einer Müllverbrennungsanlage in den Müllkessel bei einer Rauchgastemperatur von 400 bis 350$^\circ$ C $Ca(OH)_2$ als Sorbens einzublasen und den Schadstoff zu binden. Dann werden die Abgase gereinigt und in die Atmosphäre abgegeben. Nachteilig ist, daß die staub- und sorbenshaltigen Abgase über die letzten Heizflächen geführt werden, so daß sie rasch verschmutzen. Die gemeinsame Abscheidung von Staub und Chloriden bzw. Fluoriden führt zu einer innigen Durchmischung der drei Bestandteile, so daß eine Trennung und Weiterverarbeitung praktisch unmöglich gemacht wird. Eine gleichzeitige Sorption von $SO_2$ und/oder Reduzierung von $NO_x$ bzw. Sulfatbildung ist nicht nahegelegt.

Es ist bekannt, daß bei der Abscheidung von $SO_2$-hältigen Schadgasen aus Rauchgasen auf nassem Wege die Absorption bei höherem Wirkungsgrad erfolgt als im trockenen Zustand und daß bei der Trockenabscheidung der Schadgase bei oberflächlich gleichen Randbedingungen, aber unterschiedlichen Abgasen, der Abscheidegrad großen Schwankungen unterworfen ist, wobei bei Müllfeuerungen im allgemeinen ein besserer Abscheidegrad als bei Kohlefeuerungen erreicht wird.

Die Erfindung hat es sich zur Aufgabe gestellt, den Abscheidegrad aus der Kenntnis der chemischen Zusammenhänge trotz Eingabe trockener Additivstäube in den Bereich der nassen Abscheidung zu bringen, wobei die größer als dreifache Stöchiometrie bekannter Anlagen in den Bereich der einfachen Stöchiometrie gebracht wird. Die Erfindung benützt dabei die physikalisch und/oder chemisch bedingte Freisetzung von Spalt- und/oder Reaktionsprodukten bei der Einbringung des Sorptionsmittels in den teilweise abgekühlten Abgasstrom, so daß die Schadgasmoleküle am gut dispergierten Sorbens im molekularen Bereich feuchte Zustände vorfinden und so anstelle einer Gas-Festkörper-Reaktion eine Gas-Flüssigkeitsreaktion durchgeführt wird. Als wesentlicher Parameter wird hiebei die "in situ" Wasseranlagerung am Sorbenspartikel angesehen, wobei das Verfahren so gesteuert wird, daß beispielsweise trotz Wasseranlagerungen am Sulfatmolekül immer genügend Wasser für die Gas-Flüssigkeits-Reaktion am Sorbenskorn vorhanden ist.

Das erfindungsgemäße Verfahren ist dadurch gekennzeichnet, daß zumindest ein Teil des in der Brennkammer erzeugten Staubes vor der Einblasung der Sorbentien in den zu reinigenden Abgasstrom von diesem entfernt wird und daß zumindest ein Teil der Sorbentien durch Temperatureinwirkung im Aufgabebereich $H_2O$ und/oder $NH_3$ und/oder $CO_2$ in molekularen Größen abspaltet und damit das eingegebene Sorbens aktiviert, wobei solche Verbindungen bzw. Sorbentien aus einem oder mehreren der folgenden beispielsweise angeführten Verbindungen bestehen können: $NaHCO_3$, $NH_4HCO_3$, $Al(OH)_3$, Silicagel, $Ca(OH)_2$, Salze mit Kristallwasser wie $CaCl_2$, $Al_2O_3$, wobei unter Bildung dieses eingegebenen Sorbens nicht nur $SO_2$ (über Bildung eines Sulfits oder Sulfats) eingebunden wird, sondern über die im status nascendi erfolgende Änderung der Kristallstruktur das Sorbens besonders aktiv ist und somit auch die Einbindung bzw. Umwandlung von Stickoxiden zu Stickstoff bewerkstelligt wird, Wesentliche Ausgestaltungen des erfindungsgemäßen Verfahrens sind in den Unteransprüchen 2 bis 9 angegeben.

Die erfindungsgemäße Einrichtung zur Durchführung des Verfahrens ist dadurch gekennzeichnet, daß im Rauchgasstrom nach einer Verbrennungsanlage , insbesondere vor einer letzten Wärmerückgewinnungsfläche, nach der letzten Rohrheizfläche eine Zuführung für ein Sorptionsmittel oder Sorptionsmittelgemisch vorgesehen ist, der eine trockene Filteranlage, insbesondere Tuchfilter, und ein Saugzugebläse nachgeschaltet ist. Wesentliche Ausgestaltungen der erfindungsgemäßen Einrichtung sind in den Unteransprüchen 11 bis 14 angegeben.

Bei der Durchführung des erfindungsgemäßen Verfahrens hat es sich überraschend herausgestellt, daß auch der Umbau von $NO_x$-Schadgasen durch die Erfindung zu harmlosen Bestandteilen verbessert wird.

Die Bildung von Spalt- und/oder - Reaktionsprodukten erfolgt beispielsweise nach nachstehenden Gleichungen:

1) Reaktionswasser: $\quad CaO + 2\ HCl = CaCl_2 + \underline{H_2O}$

2) Konstitutionswasser: $\quad 2NaHCO_3$ ergeben bei Temperaturen über 100 $^O$ C -

$Na_2CO_3 + \underline{H_2O} + CO_2$ oder

$NH_4HCO_3$ spaltet sich bei Temperaturen von 35 $^O$ C in $NH_3 + \underline{H_2O} + CO_2$

oder $Al(OH)_3$ spaltet sich in

$AlOOH + H_2O$

3) Kristallwasser: $\quad CaCl_2$ x $6H_2O$ spaltet bei Temperaturen über 30 $^O$ C $4H_2O$ und insbesondere bei größer als 200 $^O$ C auch das restliche ($2H_2O$) Kristallwasser ab. Ähnlich reagiert $FeCl_3$ und $Al_2O_3$

4) Adhäsionswasser: $\quad$ in den Poren trockener Stäube (Salze) kann Wasser aus der Atmosphäre (Kapillarkondensation) also in molekularen Größen kondensieren, wobei diese Wassermoleküle erst bei hohen Temperaturen oft über 500 $^O$ C verdampfen können.

Beim Umbau von $NO_x$ ist es darüber hinaus noch von Wichtigkeit, daß $NH_3$ auch in kleinen (molekularen) Größen in genügendem Ausmaß zur Verfügung gestellt wird, um einerseits das $NO_x$ abzubauen bzw. in Nitrate zu binden. Hiebei können Ammonverbindungen, wie $NH_4Cl$, welches bei 300 $^O$ C in $NH_3$ und $HCl$ zerfällt, sowie $NH_4HCO_3$, welches schon bei etwa 60 $^O$ C in $NH_3$ + $\underline{H_2O}$ + $CO_2$ zerfällt, verwendet werden.

Die Funktionsweise der gleichzeitigen Entschwefelung und Entstickung erklärt sich wie folgt: Es ist bekannt, daß $Na_2CO_3$ (Soda) kaum wirksam Schwefel einbindet, die Zugabe von $NaHCO_3$, z.B. in der Form der Zugabe von Speisesoda oder als Mineral (Nahcolite) aber im bedeutend höheren Maße, wobei die Zugabe bei Temperaturen über der Entbindung von $H_2O$ und $CO_2$ erfolgt (über 60 $^O$ C). Es tritt hier $H_2O$ und $CO_2$ aus dem Kristall aus und es verbleibt $Na_2CO_3$, welches in einer besonders aktiven Form vorliegt, da es sich im "status nascendi = eben erst gebildet" befindet und solchermaßen noch die Gitterstruktur des Speisesoda besitzt, chemisch aber nur mehr als $Na_2CO_3$ (Soda) vorliegt. Gleichzeitig liegt Wasser in den Poren, das sich beim Austritt aus dem Kristall bildete, vor, welches die Einbindung von $SO_2$ fördert. Der aktive Kristall: $Na_2CO_3$ hingegen ist deshalb aktiv, weil die Gitterfehlstellen unabgesättigte Elektronen freisetzen, welche ihrerseits bei der Einbindung bzw. Umwandlung von $NO$ in $N_2$ und/oder $NO_2$ bewerkstelligen und auch die spezifische Oberfläche der frisch gebildeten bzw. der sich umbildenden Kristalle sehr groß ist. Wesentlich ist, daß zumindest teilweise instabile Verbindungen geschaffen werden, die das $NO_x$ in $N$ reduzieren, so daß sich $N_2$ bilden kann, welches

infolge des geringen Temperaturniveaus nicht mehr in $NO_x$ rückgewandelt werden kann. Das solchermaßen dargestellte $NO_2$ wird
zudem von dem gleichzeitig zur Verfügung gestellten $NH_3$
(entweder als $NH_3$ oder als $NH_4OH$, oder aber auch durch die Zersetzungen eines $NH_3$-Salzes angeboten) zu $N_2$ umgebildet. Es bildet sich aus $3NO_2 + 4NH_3$ letzten Endes $3'5N_2 + 6H_2O$.

Für die gleichzeitige Entschwefelung und Entstickung gelten
somit folgende Kriterien für die Auswahl der Wirkstoffe zur
Mischung des Sorbens. In den einzelnen Gruppen erfolgt die Auswahl nach Verfügbarkeit bzw. Wirtschaftlichkeit und/oder Weiterverarbeitung der gebrauchten Sorbentien. Für die Entschwefelung sollten es Verbindungen sein, die $H_2O$ abspalten, welches
oberflächlich für die Einbindung zum Sulfit/später Sulfat günstigere Ausgangsbedingungen für die ansonsten recht träge Reaktion Gas/Feststoff ($SO_2$ an alkalische Substanz) schafft, welche
in Anwesenheit von Wasser kinetisch begünstigt ist, also beispielsweise, $NaOH$ (fest oder flüssig), $NaHCO_3$, $NH_4HCO_3$,
$Ca(OH)_2$, $Al(OH)_3$, $AlO(OH)$, Verbindungen mit Kristallwasserabgabe, $CaO + 2HCl$ = Reaktionswasser, $NaHSO_3$, $BOH$,fest oder flüssige organische Verbindungen wie organische Säuren: Ameisensäure,
Essigsäure.

Für die Entstickung sollte es zusätzlich bzw. gleichzeitig eine
Verbindung sein, welche einen plötzlichen Kristall- bzw. Gitterumbau bewerkstelligt, wobei die neugeschaffene Verbindung
(durch Wärme, durch mechanische Gewalt wie Mahlen eventuell) im
statu nascendi (des Zerplatzens, des Umbaus zur neuen Verbindung) besonders aktiv ist und unabgesättigte Oberflächenvalenzen besitzt und diese zum Umbau von $NO$ zu $N_2$ und/oder $NO_2$ benützen kann, wie dies z.B. durch Zugabe von $NaHCO_3$ (Umbau zu

Na$_2$CO$_3$) geschieht und ein besonders aktives Na$_2$CO$_3$* im statu nascendi bildet.

Das nicht gleichzeitig zu N$_2$ umgewandelte NO$_2$ (aus dem früheren NO) muß nun in weiteren, gleichzeitig oder später, durch Zugabe von NH$_3$ bzw. solchen NH$_3$-Verbindungen oder Lösungen, welche NH$_3$ unter Zufuhr von Wärme abgeben, eventuell auch NH$_3$* , zu N$_2$ umgewandelt ausreagieren.

Im Rahmen der Erfindung ist es möglich, die Trockenabsorption wirkungsgradmäßig zu verstärken. Dies ist besonders wichtig bei hohen Brennkammertemperaturen, wie sie beispielsweise bei Steinkohlefeuerungen auftreten, wo die Kalkadditivzugabe in der Brennkammer nur wenig wirksam ist.

Da die chemische Industrie heute sich für die Bedürfnisse der Rauchgasreinigung (billiges Sorbens von nicht zu großer Reinheit aber in großen Mengen) erst umstellen muß, ist es von großer Bedeutung, daß sich der Betreiber der Feuerungsanlagen das Sorbens leicht selbst herstellen kann und er nur den im Überfluß erhältlichen Chemierohstoff NH$_3$ benötigt, dessen Beschaffung keine allzu große Belastung darstellt. In diesem Sinn bilden die Unteransprüche , die die Sorbensherstellung betreffen, mit dem Sorptionsverfahren eine Einheit.

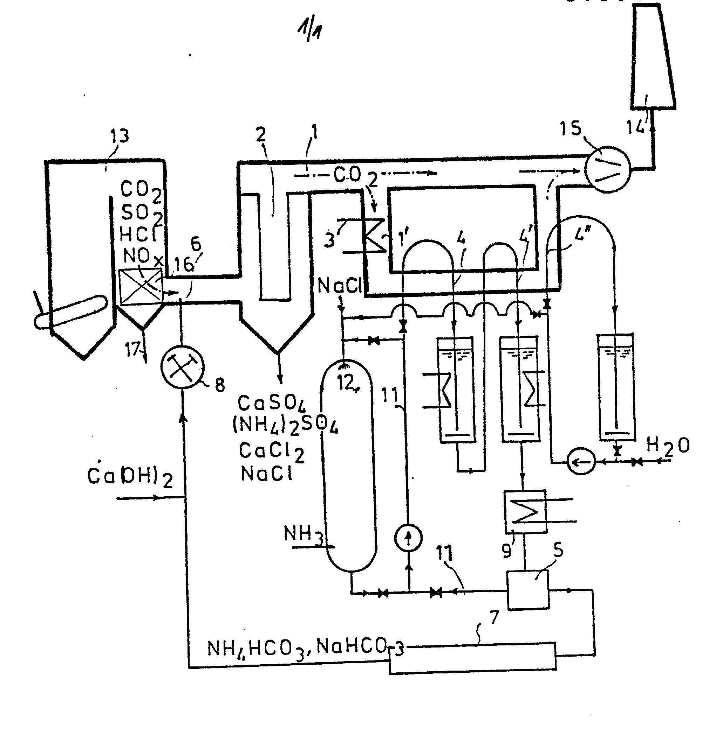

Die Erfindung ist in der angeschlossenen Figur beispielsweise und schematisch dargestellt. Die Figur zeigt die Schaltung einer Wärmekraftanlage mit der erfindungsgemäßen Rauchgasreinigung- und Absorptionsmittelerzeugungsanlage.

Der abgekühlte Rauchgasstrom 1 aus einer Verbrennungsanlage 13 strömt mit etwa 200 $^\circ$ C durch ein Tuchfilter 2, in welchem die staubförmigen Verunreinigungen abgeschieden werden, über einen Kamin 14 ins Freie. Am Ausgang aus der Verbrennungsanlage 13 wird die Flugasche in einem Trockenabscheider, wie z.B. Elektrofilter 16, abgeschieden. Dem gereinigten Rauchgas, das nun auf unter 400 ° C abgekühlt ist, wird in einer Absorptionsstufe ein trockenes Sorbens wie z.B. $Ca(OH)_2$ zugemischt, welches die Schadgase, wie z.B. $SO_2$ und/oder HCl, absorbiert, wobei das beladene Sorbens anschließend in einem Tuchfilter 2 abgeschieden wird. Hier tritt nun die Schwierigkeit auf, daß bei geringem Chloridgehalt im Abgas das Sorbens nur oberflächlich mit $SO_2$ reagiert, so daß nur eine ganz geringfügige Einbindung von $SO_2$ und dann nur mit hoher Stöchiometrie 2 bis 3, erfolgen kann. Dieser Nachteil läßt sich beheben, indem man Chloride wie z.B. $CaCl_2$ oder $FeCl_3$ dem Sorbens in der Größenordnung von 2 bis 5 % zumischt, so daß das $Ca(OH)_2$ mit Chloriden gemischt wird. Diese Mischung ist besonders wirksam, wenn die beiden Sorbentien bereits bei der Herstellung (Löschung des gebrannten Kalkes unter Salzsäure-Zusatz) gemeinsam erzeugt wurden. Der wesentliche Vorteil beim $CaCl_2$ liegt darin, daß dieses Salz relativ viel Kristallwasser beinhalten kann und dieses bei Temperaturen über 200 °C zur Gänze abgibt, wodurch bei der Sulfatbildung diese Wasserteilchen in molekularen Größen, in einer Art status nascendi, entstehen. Durch diese Feuchtigkeit, die nicht nur an der Oberfläche des Staubkornes sondern auch aus dem Inneren desselben hervorquillt, findet anstatt der sonst üblichen nur ungenügend schnell und nicht ausreichend verlaufenden Gas-Feststoffreaktion praktisch eine Gas-Flüssigkeits-Reaktion statt, welche mit sehr hohem Wirkungsgrad abläuft. Hiebei ist es wesentlich, daß die Flüssigkeit praktisch am Korn entsteht und nicht durch den Wasserdampfgehalt des Abgases herangebracht wird. Dies wurde durch bisher bekannte, nasse Ver-

fahren, z.B. Wäscher, Sprühverfahren, Taupunkt-Unterschreiten mit Naßverfahren des Tuchfilters, Einspritzen von $H_2O$ vor einem Filter und noch anderen, versucht mit dem ungünstigen Ergebnis, daß insbesondere Tuchfilter mit einem unökonomisch hohen Druckverlust behaftet werden, da das Wasser außerhalb der Staubpartikel zu einem Verkleben der Staubpartikel führt, während das Wasser an der sogenannten inneren Oberfläche der Staubpartikel also am Sorbens diesen Nachteil nicht aufweist. Durch die $Ca(OH)_2$ - und $CaCl_2$- Zugabe läßt sich das $NO_x$ in größeren Mengen nicht abbauen. Um auch dieses Schadgas in den Griff zu bekommen, wird erfindungsgemäß mit dem $Ca(OH)_2$ , welches auch $CaCl_2$ enthalten kann, Hirschhornsalz, im wesentlichen $NH_4HCO_3$ und/oder Speisesoda ($NaHCO_3$) und/oder ähnliche Verbindungen zugemischt oder durch die genannten Hydrogencarbonate ersetzt, welche im verwendeten Temperaturbereich zwischen 30 $^{\circ}$ C und 400 $^{\circ}$ C nicht beständig sind und in ihre Bestandteile zerfallen. Soweit diese Bestandteile eine große Reaktionsfreudigkeit besitzen, lassen sich die Schadgase in stöchiometrischem Verhältnis mit hohem Wirkungsgrad abbauen.

Hirschhornsalz und Speisesoda sind relativ teure Absorbentien, die sich jedoch in einer nachgeschalteten Anlage aus dem $CO_2$ des Rauchgasstromes und Wasser, $NH_3$ (und Natriumchlorid) herstellen bzw. wiedergewinnen lassen. Zu diesem Zweck wird dem Rauchgasstrom 1 etwa 5 % des Rauchgases abgezweigt und über einen Rauchgaskühler 3 geführt. Dieser Teilstrom 1' wird nun einer oder mehreren Lösungsreaktoren 10,10' zugeführt, wo er mit Wasser bzw. mit $NH_3$ gesättigtem Wasser in Berührung gebracht wird und das $CO_2$ des gereinigten Rauchgases in teilweise gelöst wird. Zu diesem Zweck sind im Teilstrom 1' des Rauchgases Rauchgasentnahmestellen 4, 4' und 4'' vorgesehen. Die erzeugte Lösung der drei genannten Chemikalien ($NH_3$, NaCl und $CO_2$) wird sowohl in Lösungsreaktoren 10' als auch in einem nachgeschalteten Kühler 9 gekühlt, so daß das Hirschhornsalz bzw. Speisesoda ausfällt, welches in einer Zentrifuge 5 ausgeschleudert und über einen Trockner 7 einer Kristallzerkleinerungsvorrichtung 8, wie z.B. Mühle, der Aufgabeeinrichtung 6 für das Sorbens zugeführt wird. Die an Kristallen verarmte Mutterlauge wird über die Rezirkulationsleitung 11 dem $NH_3$-Aufsättiger 12 zugeführt, bzw. mit der mit $NH_3$ aufgesättigten Mutterlauge vermischt den Rauchgasentnahmestellen 4 zugeführt, so daß sie wieder mit $CO_2$ in Kontakt kommen und neue Sorbenskristalle erzeugen. Der Teilstrom 1' des Rauchgases wird nun nach Entnahme der benötigten $CO_2$-Mengen wieder dem heißen Rauchgasstrom 1 bei etwa 200 ° C zugemischt und über das Gebläse 15 in den Kamin 14 abgegeben.

Zur Erzielung eines reinen beladenen Sorbens ist es günstig, die Rauchgase vor der Aufgabestelle 6 des Sorbens vorzugsweise in einem Elektrofilter 16 trocken zu reinigen und die Ascheteilchen gemäß Pfeil 17 zu entfernen, damit möglichst wenig Ascheteilchen aus der Verbrennungsanlage 13 in das Tuchfilter 2 gelangen, und dieses weniger oft abgereinigt werden muß. Damit wird der Druckverlust in geringen Grenzen gehalten.

Weitere Gründe sind:

A) Das in der Sorptionsstufe durch Reaktion mit den Schadgasen erhaltene Produkt hat Verkaufswert oder ist im Betrieb wieder verwendbar, wird aber durch den hohen Rohgasstaubgehalt im Wert gemindert oder unbrauchbar gemacht. Bei der Reaktion von $SO_2$

mit Hirschhornsalz entsteht Ammonsulfat bzw. Ammonbisulfat, welches relativ rein als Düngemittel eingesetzt werden könnte.

B) Wenn es für die Abbindung des Schadgases sinnvoll ist, ist die Ausreaktion des Sorbens am Tuchfilter möglichst vollkommen durchzuführen (Additivausnützung). Dies bedeutet beim Tuchfilter eine möglichst lange Intervallzeit zwischen den Reinigungspulsen. Die Staubbelegung mit nicht reaktionsfähigem Staub aus der Brennkammer bedingt aber ein kürzeres Reinigungsintervall und noch reaktionsfähiges Sorbens wurde vorzeitig von der Reaktionsfläche am Filterkuchen des Tuchfilters entfernt.

C) Wenn in einer bestehenden Anlage ein (gebrauchtes, aber im großen und ganzen oder teilweise gebrauchsfähiges) Filter, z.B. E-Filter vorhanden ist, kann durch die Hinzuschaltung dieses E-Filters das folgende Tuchfilter kleiner und damit die Gesamtanlage kostengünstiger konzipiert werden.

Damit kann bei möglichst vollständiger Reinigung der Abgase vor der Aufgabe der Sorbentien hinter der Verbrennungsanlage eine Düngemittelfabrik oder eine Stein- bzw. Plattenerzeugungsanlage angeschlossen werden, die die erzeugten beladenen Sorbentien veredelt und aus der Umweltschutzanlage Nutzen zieht oder zumindest die Deponiemengen vermindert.

Im Rahmen der Erfindung ist es möglich, schon in der Brennkammer der Verbrennungsanlge oder im etwa 1000 $^\circ$ C Abgasstrom, also kurz danach, ein Sorbens aufzugeben, welches $SO_2$ bindet und so für die nachgeschaltete erfindungsgemäße $SO_2/NO_x$-Ab-

scheidung bessere Verhältnisse schafft, so daß beispielsweise das Mengenverhältnis $SO_2/NO_x$ beeinflußt wird und im optimalen Verhältnis 2 : 1 vorliegt oder überhaupt der $SO_2$-Partialdruck gesenkt wird, um den entsprechend teuren Sorbensaufwand in der Niedertemperaturstufe zu senken.

- 1 -

Patentansprüche:

1) Verfahren zur Abscheidung von Schadstoffen, wie z.B. $SO_2$, HCl und $NO_x$, aus Verbrennungsabgasen mittels trockener Sorbentien auf Basis Oxidhydraten/Hydroxiden bzw. Oxiden wie z.B. $Ca(OH)_2$, AlO(OH), $Al(OH)_3$, $Al_2O_3 \times H_2O$, Bauxit, CaO, NaOH und/oder Karbonaten/Hydrogenkarbonaten, wie z.B. $NaHCO_3$ oder $NH_4HCO_3$, bei Kraftwerksanlagen, insbesondere mit hoher Brennkammertemperatur, wie z.B. Steinkohlenfeuerung, bei dem die staubförmigen Sorbentien bei unter $400^o$ C Rauchgastemperatur in zumindest einen Teilstrom des Rauchgasstromes unter Bindung der eventuell vorhandenen Chloride eingeblasen und die Rauchgase anschließend nach einer Abscheidung der festen Bestandteile über einen Kamin in die freie Atmosphäre abgegeben werden, dadurch gekennzeichnet, daß zumindest ein Teil des in der Brennkammer erzeugten Staubes vor der Einblasung der Sorbentien in den zu reinigenden Abgasstrom von diesem entfernt wird und daß zumindest ein Teil der Sorbentien durch Temperatureinwirkung im Aufgabebereich $H_2O$ und/oder $NH_3$ und/oder $CO_2$ in molekularen Größen abspaltet und damit das eingegebene Sorbens aktiviert , wobei solche Verbindungen bzw. Sorbentien aus einem oder mehreren der folgenden beispielsweise angeführten Verbindungen bestehen können: $NaHCO_3$, $NH_4HCO_3$, $Al(OH)_3$,Silicagel, $Ca(OH)_2$, Salze mit Kristallwasser wie $CaCl_2$, $Al_2O_3$, wobei unter Bildung dieses eingegebenen Sorbens nicht nur $SO_2$ (über Bildung eines Sulfits oder Sulfats) eingebunden wird, sondern über die im status nascendi erfolgende Änderung der Kristallstruktur das Sorbens besonders aktiv ist und somit auch die Einbindung bzw. Umwandlung von Stickoxiden zu Stickstoff bewerkstelligt wird.

- 2 -

2) Verfahren nach Anspruch 1, dadurch gekennzeichnet, daß bei der Abscheidung von $SO_2$, insbesondere in Abwesenheit von HCl im Rauchgas, zusammen mit dem Sorbens, in fester oder flüssiger Form, HCl oder als Sorbens ein Gemisch mit 0,5 - 50 %, insbesondere 2 bis 10 %, eines Halogenides, insbesondere Chlorides wie NaCl und/oder einer ammoniakalischen oder alkalischen Verbindung wie $NH_4Cl$, $(NH_4)_2CO_3$ oder $Ca(OH)_2$ mit einer Zersetzungs- oder Sublimationstemperatur von $\leq 400^\circ$ C in den Abgasstrom eingeblasen wird.

3) Verfahren nach Anspruch 1 oder 2, dadurch gekennzeichnet, daß als Sorptionsmittel staubförmiges überlöschtes $Ca(OH)_2$ in einer Hydratationsstufe, insbesondere in einer Mischung mit $CaCl_2$ und/oder $FeCl_3$ mit Kristallwasser, in den Abgasstrom eingeblasen wird, wobei die Chloride durch Behandlung des $Ca(OH)_2$ und seiner Verunreinigungen mit HCl hergestellt werden.

4) Verfahren nach Anspruch 1 oder 2, dadurch gekennzeichnet, daß bei der Abscheidung von $SO_2$ in Abwesenheit von HCl, insbesondere bei der zusätzlichen Abscheidung von $NO_x$, im Rauchgasstrom als Sorbens $Ca(OH)_2$ und/oder Hydrogencarbonate wie z.B. $NaHCO_3$ und/oder $NH_4HCO_3$ oder $NH_4OH$ oder $NH_3$ oder $NH_3$-Verbindungen in den Rauchgasstrom eingeblasen werden.

5) Verfahren nach Anspruch 2 oder 4, dadurch gekennzeichnet, daß das benötigte Sorbens auf Ammon- und/oder Sodabasis aus dem gereinigten Rauchgas nach dem Trockenabscheider durch Einleiten von Ammoniak in wässriger Lösung und unter Wärmeabfuhr hergestellt wird.

6) Verfahren nach Anspruch 5, dadurch gekennzeichnet, daß für die Herstellung der Sorbentien auf Sodabasis in die wässrige Lösung des Ammoniak NaCl eingebracht wird.

7) Verfahren nach Anspruch 1, dadurch gekennzeichnet, daß die Rauchgase vor der Einblasung der Sorbentien in einem Elektrofilter trocken gereinigt werden.

8) Verfahren nach Anspruch 1, dadurch gekennzeichnet, daß die Sorbentien gemahlen, insbesondere unmittelbar vor der Aufgabe in den Abgasstrom gemahlen, dem Abgasstrom zugegeben werden.

9) Verfahren nach Anspruch 5 oder 6, dadurch gekennzeichnet, daß die Erzeugung des benötigten Sorbens vorzugsweise in einem Teilstrom des von sauren Schadgasen wie $SO_2$, HCl und $NO_x$ gereinigten Rauchgasstromes erfolgt, der nach einer Kühlung an Rauchgasentnahmestellen vorbeigeführt wird, in welchen das noch $CO_2$-hältige Rauchgas angesaugt und insbesondere nach hydraulischer Verdichtung in gekühlter vorzugsweise $NH_3$-hältiger Flüssigkeit unter Kristallbildung gelöst wird und anschließend die Kristalle ausgeschleudert und nach einer zumindest oberflächlichen Trocknung und insbesondere Mahlung in den vorgereinigten Rauchgasstrom vor einem Tuchfilter eingeblasen werden, wobei die an Kristallen verarmte Flüssigkeit nach der Zentrifuge in einen $NH_3$-Aufsättiger rückgeführt und von diesem wieder den Rauchgasentnahmestellen zugeführt wird.

10) Einrichtung zur Durchführung des Verfahrens nach mindestens einem der Ansprüche 1 bis 9, dadurch gekennzeichnet, daß im Rauchgasstrom nach einer Verbrennungsanlage (13), insbesondere vor einer letzten Wärmerückgewinnungsfläche, nach der letzten Rohrheizfläche eine Zuführung für ein Sorptionsmittel oder Sorptionsmittelgemisch vorgesehen ist, der eine trockene Filteranlage,

- 4 -

insbesondere Tuchfilter,und ein Saugzuggebläse nachgeschaltet ist.

11) Einrichtung nach Anspruch 10, dadurch gekennzeichnet, daß, vorzugsweise in einem Teilstrom des Rauchgasstromes (1) nach dem Tuchfilter (2), ein Rauchgaskühler (3) und Rauchgasentnahmestellen (4,4',4'') vorgesehen sind, durch welche Rauchgas angesaugt und mit Flüssigkeit in Berührung gebracht und in dieser gelöst wird, wobei nach Durchströmen eines Kühlers (9) Salze auskristallisieren, die in einer Zentrifuge (5) aus der rezirkulierten Lösung abgetrennt und über eine Aufgabeeinrichtung (6) vor dem Tuchfilter (2) in den von Feststoffen gereinigten Rauchgasstrom (1) aufgebbar sind.

12) Einrichtung nach Anspruch 11, dadurch gekennzeichnet, daß zwischen Zentrifuge (5) und Aufgabeeinrichtung (6) ein Trockner (7) und eine Kristallzerkleinerungsvorrichtung (8) vorgesehen sind.

13) Einrichtung nach Anspruch 11, dadurch gekennzeichnet, daß die Rauchgasentnahmestellen (4,4',4'') Teile von Lösungsreaktoren (10, 10')sind, die gekühlt und in Reihe geschaltet sowie für die Lösung von $CO_2$ in $NH_3$-hältigem Wasser ausgebildet sind.

14) Einrichtung nach Anspruch 13, dadurch gekennzeichnet, daß zwischen dem letzten Lösungsreaktor (10') und der Zentrifuge (5) ein Kühler (9) vorgesehen ist und daß an der Zentrifuge (5) eine Rezirkulationsleitung (11) für die an Kristallen verarmte Flüssigkeit vorgesehen ist, welche über einen $NH_3$-Aufsättiger (12) und den Rauchgasentnahmestellen (4,4') in die Lösungsreaktoren (10') führt.

0190416

1/1